# EUROPÄISCHE PATENTSCHRIFT

(11) **EP 0 533 997 B1**
(45) Veröffentlichungstag und Bekanntmachung des Hinweises auf die Patenterteilung: **20.03.1996**
(21) Anmeldenummer: 91116607.2
(22) Anmeldetag: 27.09.1991
(51) Int. Cl.: H04N 5/08, H04N 5/18

(54) **Gerät zum Verarbeiten von in Zeilen aufgeteilten Videosignalen mit einer digitalen Synchronabtrennstufe**
Apparatus for processing a video signal, composed of lines, using a digital synchronisation separator
Appareil pour traitement d'un signal vidéo, composé de lignes, avec un séparateur de synchronisation numérique

(43) Veröffentlichungstag der Anmeldung: 31.03.1993
(73) Patentinhaber: SIEMENS AKTIENGESELLSCHAFT, D-80333 München (DE)
(72) Erfinder: Kramer, Ronalf, Dipl.-Ing., W-8000 München 60 (DE)

(56) Entgegenhaltungen:
- EP-A- 0 330 006
- EP-A- 0 420 320
- EP-A- 0 420 321
- US-A- 4 697 211

## Beschreibung

Die Erfindung betrifft ein Gerät zum Verarbeiten von in Zeilen aufgeteilten Videosignalen mit einer digitalen Synchronabtrennstufe, die aus digitalen Videosignalen in bezug auf eine digitale Synchronabtrennschwelle ein zeilensynchrones Taktsignal erzeugt.

Bei solchen Geräten, wie z.B. Fernsehgeräten oder Videorecordern, wird stets eine Synchronisationseinrichtung eingesetzt, die aus den Synchronsignalanteilen des Videosignals die zur zeitrichtigen Verarbeitung des Videosignals notwendigen Synchrontaktsignale erzeugt. Solche Synchronisationseinrichtungen enthalten Phasenregelkreise, die ein zu einem Eingangstaktsignal gehörendes Ausgangstaktsignal erzeugen, das in einer festen Phasenbeziehung zum Eingangstaktsignal steht und ein ganzzahliges Vielfaches der Frequenz des Eingangstaktsignals hat.

Problematisch bei solchen Synchronisationseinrichtungen ist die Tatsache, daß der Gleichanteil des Videosignals und die Amplitude seines Synchronsignalanteils erheblich schwanken können. Dies ist insbesondere dann der Fall, wenn von einer Videosignalquelle auf eine andere Videosignalquelle umgeschaltet wird.

Wird als Phasenregelkreis ein digitaler Phasenregelkreis verwendet, wird das analoge Videosignal zunächst mittels einer Analog-Digital-Wandlereinrichtung digitalisiert und dann der Synchronisationseinrichtung zugeführt. In der Dissertationsschrift "Takt- und Farbträgerverarbeitung im digitalen Fernsehempfänger", Wilhelm Möring, Technische Universität Braunschweig, 1984, wird eine Anordnung angegeben, die der Abtrennung des Synchronsignalanteils vom digitalen Videosignal dient. Dabei wird für das digitale Videosignal ein fester Pegel für den Schwarzwert vorausgesetzt.

Der Pegel des Synchronwertes wird gemessen und dann zur Bildung der Synchronabtrennschwelle mit einem konstanten Faktor gewichtet. Dies setzt zusätzlichen Schaltungsaufwand außerhalb der Synchronabtrennstufe voraus: es muß eine Klemmung des Videosignals vor der Synchronisationseinrichtung sowie eine Umschaltung der Betriebsweise für Videosignale mit stark unterschiedlichen Pegeln des Synchronwertes, wie sie z.B. von einer Antenne und einem Videorecorder geliefert werden, vorgesehen sein. Insbesondere bei stark verrauschten Videosignalen ist das sichere Einschwingen des Gesamtsystems aus Klemmung, Synchronabtrennstufe und Phasenregelkreis problematisch.

Aufgabe der Erfindung ist es daher, ein Gerät anzugeben, das eine digitale Synchronisationseinrichtung enthält, die sicher auf die Synchronsignalanteile eines digitalen Videosignals synchronisiert. Dies soll weitgehend unabhängig von der Lage des Gleichanteiles des digitalen Videosignals und der Amplitude seines Synchronsignalanteils erreicht werden.

Diese Aufgabe wird durch die folgenden Merkmale gelöst:
- (a): es ist eine Schaltung (20) vorgesehen, der das Videosignal (17) zugeführt wird und durch die ein geklemmtes Videosignal (40) erzeugt wird, dessen Schwarzwert auf einen konstanten Wert im Aussteuerbereich des Videosignals dadurch eingestellt wird, daß die Schaltung (20)
- (b): eine erste Meßanordnung (23) enthält, die durch ein näherungsweises Meßverfahren einen ersten Meßwert für den Schwarzwert des geklemmten Videosignales bestimmt,
- (c): eine zweite Meßanordnung (24) enthält, die durch ein exaktes Meßverfahren einen zweiten Meßwert für den Schwarzwert des geklemmten Videosignals bestimmt,
- (d): eine erste Multiplexereinrichtung (31) enthält, durch die durch ein erstes Steuersignal (42) als Meßwert für den Schwarzwert (48) des geklemmten Videosignals entweder der erste oder der zweite Meßwert für den Schwarzwert des geklemmten Videosignals ausgewählt wird, und
- (e): eine erste Regeleinrichtung (27) mit Tiefpaßcharakter zur Dämpfung von kurzzeitigen Pegelschwankungen enthält, durch die aus dem Meßwert für den Schwarzwert (48) ein erster geregelter Meßwert (52) gebildet wird, der als Stellgröße zur Klemmung des Videosignals verwendet wird,
- (f): es ist eine dritte Meßanordnung (25) vorgesehen, die aus dem geklemmten Videosignal (40) durch ein näherungsweises Meßverfahren einen ersten Meßwert für den Synchronwert des geklemmten Videosignals bestimmt,
- (g): es ist eine vierte Meßanordnung (26) vorgesehen, die aus dem geklemmten Videosignal (40) durch ein exaktes Meßverfahren einen zweiten Meßwert für den Synchronwert des geklemmten Videosignals bestimmt,
- (h): es ist eine zweite Multiplexereinrichtung (32) vorgesehen, durch die durch das erste Steuersignal (42) als Meßwert für den Synchronwert (49) des geklemmten Videosignales entweder der erste oder der zweite Meßwert für den Synchronwert des geklemmten Videosignals ausgewählt wird,
- (i): es sind Mittel vorgesehen, mit denen ein Mittelwert aus dem Meßwert für den Schwarzwert (48) und den Meßwert für den Synchronwert (49) gebildet wird,
- (j): es ist eine zweite Regeleinrichtung (21) mit Tiefpaßcharakter zur Dämpfung von kurzzeitigen Schwankungen des Mittelwertes vorgesehen, deren Eingangssignal der Mittelwert und deren Ausgangssignal die Synchronabtrennschwelle (41) ist, und
- (k): es ist eine Steuereinrichtung (28) vorgesehen, die das erste Steuersignal (42) erzeugt, so daß in der Startphase des Einschwingvorgangs der Synchronabtrennstufe die ersten und bei weitgehend eingeschwungenem Zustand der Synchronabtrennstufe die zweiten Meßwerte für den Schwarzwert und den Synchronwert des geklemmten Videosignals verwendet werden.

Ein erfindungsgemäßes Gerät hat den Vorteil, daß die Synchronisationseinrichtung auf Videosignale verschiedener Videosignalquellen sicher einrastet.

Die Erfindung wird im folgenden anhand von den in der Zeichnung dargestellten Figuren näher erläutert. Es zeigen
- FIG 1: ein Prinzipschaltbild eines erfindungsgemäßen Gerätes mit einer Synchronabtrennstufe,
- FIG 2: ein Prinzipschaltbild zur Erzeugung der Synchronabtrennschwelle,
- FIG 3: mögliche Pegellagen von in der Anordnung nach FIG 2 vorkommenden Signalen,
- FIG 4: eine Realisierung der ersten Meßanordnung,
- FIG 5: eine Realisierung der dritten Meßanordnung,
- FIG 6: eine Realisierung der ersten Regeleinrichtung und
- FIG 7: eine Realisierung der zweiten Regeleinrichtung.

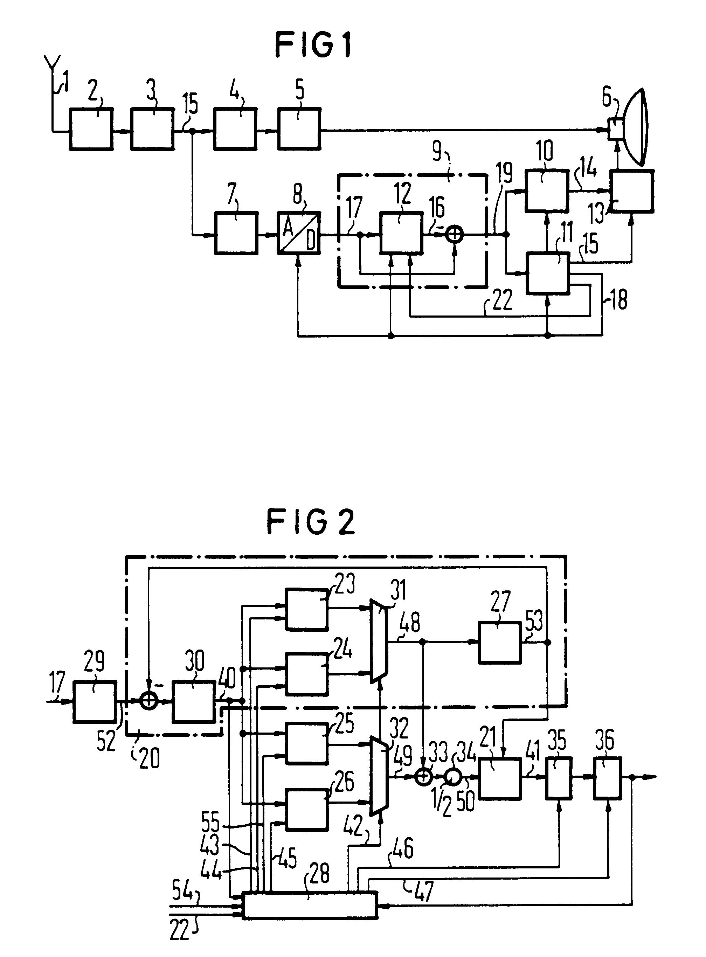

In FIG 1 ist ein Prinzipschaltbild eines erfindungsgemäßen Gerätes mit einer Synchronabtrennstufe gezeigt. Dem Fernsehgerät wird über eine Antenne 1 ein HF-Eingangssignal zugeführt und in einen Tuner 2 eingespeist. In einer nachfolgenden Stufe 3 wird ein ZF-Signal erzeugt und demoduliert. Das Ausgangssignal der Stufe 3 ist ein analoges Videosignal 15. Das Videosignal 15 wird in einer Bildsignalverarbeitungsstufe 4 farbdecodiert. Dieser ist eine Videoendstufe 5 nachgeschaltet, die eine Bildröhre 6 ansteuert. Das analoge Videosignal 15 wird weiterhin einer analogen Klemmeinrichtung 7 zugeführt, die den Gleichanteil des analogen Videosignals 15 so klemmt, daß das Ausgangssignal der Klemmeinrichtung 7 im Aussteuerbereich einer nachgeschalteten Analog-Digital-Wandlereinrichtung 8 liegt. Von der Analog-Digital-Wandlereinrichtung 8 wird ein digitales Videosignal 17 erzeugt. Dessen Synchronsignalanteil 19 wird mittels einer Synchronsignalabtrennstufe 9 vom digitalen Videosignal 17 abgetrennt. Hierzu wird in einer Stufe 12 eine Synchronabtrennschwelle 16 gebildet, die vom digitalen Videosignal 17 subtrahiert wird. Aus dem Synchronsignalanteil 19 werden in einer Vertikalabtrennstufe 10 Vertikalimpulse 14 erzeugt. Weiterhin wird der Synchronsignalanteil 19 einer digitalen Synchronisationseinrichtung 11 zugeführt, die im wesentlichen einen digitalen Phasenregelkreis enthält und Horizontalimpulse 15, zeilengekoppelte Taktsignale 18 und ein Steuersignal 22 erzeugt. Die Horizontal- und Vertikalimpulse 15, 14 werden in einer Horizontal- und Vertikal-Ablenkstufe 13 zur Ansteuerung der Bildröhre 6 weiterverarbeitet. Durch die zeilengekoppelten Taktsignale 18 wird die digitale Signalverarbeitung im Analog-Digital-Wandler 8, der Synchronabtrennstufe 9, der Vertikalabtrennstufe 10 und der digitalen Synchronisationseinrichtung 11 gesteuert.

FIG 2 zeigt ein Prinzipschaltbild zur Erzeugung der Synchronabtrennschwelle. Das digitale Videosignal 17 wird einem Tiefpaßfilter 29 zugeführt, der den Chroma-Anteil und eventuell vorhandenes Rauschen vom digitalen Videosignal 17 abtrennt. Das tiefpaßgefilterte Videosignal 52 wird einer Schaltung 20 zugeführt, die eine Klemmung derart bewirkt, daß der Schwarzwert des Signals 52 auf den Wert, der in der Mitte des Aussteuerbereichs des Signals 52 liegt, ausgeregelt wird. Für die Zahlendarstellung von digitalen Signalwerten wird beispielsweise das Zweierkomplement gewählt, so daß die digitale Klemmung dadurch erfolgt, daß vom Signal 52 ein - noch näher zu erläuternder - Meßwert für den Schwarzwert des geklemmten Videosignals subtrahiert wird. Das resultierende Signal wird über einen Begrenzer 30 geführt, der den Wertebereich des geklemmten Videosignals 40 auf einen oberen und unteren Grenzwert begrenzt. Den Eingangswerten des Begrenzers 30, die oberhalb des oberen Grenzwertes liegen, wird als Ausgangswert der obere Grenzwert zugewiesen. Den Eingangswerten, die unterhalb des unteren Grenzwertes liegen, wird der untere Grenzwert zugewiesen. Somit werden Fehlberechnungen in den nachfolgenden Schaltungsteilen aufgrund von Übersteuerungen vermieden. Es resultiert das geklemmte digitale Videosignal 40, welches nun Schaltungsblöcken zugeführt wird, die den Schwarzwert und den Synchronwert des Signals 40 je ein Mal in einer Zeile berechnen.

Für die Messung des Schwarzwertes sind eine erste Meßanordnung 23 und eine zweite Meßanordnung 24 vorgesehen. Die Meßanordnung 23 berechnet einen ersten Meßwert für den Schwarzwert des Videosignals nach einem näherungsweisen Verfahren, während die Meßanordnung 24 einen zweiten Meßwert für den Schwarzwert nach einem exakten Verfahren berechnet. Um die Meßverfahren der Meßanordnungen 23, 24 zeitrichtig zum Videosignal zu steuern, sind die Steuersignale 43 bzw. 44 vorgesehen. Die von den beiden Meßanordnungen 23, 24 berechneten ersten und zweiten Meßwerte für den Schwarzwert des geklemmten Videosignals werden einem Multiplexer 31 zugeführt, der anhand des Steuersignals 42 einen der beiden Werte auswählt und als Meßwert 48 einer ersten digitalen Regeleinrichtung 27 zuführt. Die Regeleinrichtung 27 besitzt Tiefpaßcharakter für das Signal 48, so daß kurzzeitige Schwankungen des Signals 48 gedämpft an das Signal 53 weitergegeben werden. Kurzzeitige Schwankungen sind solche Schwankungen, die durch Pegelsprünge zwischen zwei Zeilen oder Pegeländerungen, die auf einige wenige Zeilen verteilt sind, hervorgerufen werden. Das Signal 53 wird, wie eingangs erwähnt, zur Klemmung des Schwarzsignalanteils des Videosignals 52 auf die Mitte seines Aussteuerbereichs verwendet.

Das geklemmte Videosignal 40 wird außerdem einer dritten Meßanordnung 25 und einer vierten Meßanordnung 26 zur Berechnung seines Synchronwertes zugeführt. Die Meßanordnung 25 bestimmt einen ersten Meßwert für den Synchronwert des Signals 40 nach einem näherungsweisen Verfahren, während die Meßanordnung 26 einen zweiten Meßwert für den Synchronwert des Signals 40 nach einem exakten Verfahren bestimmt. Den Meßanordnungen 25, 26 werden weiterhin die Steuersignale 55 bzw. 45 zugeführt. Die Ausgänge der beiden Meßanordnungen 25, 26 sind mit einem weiteren Multiplexer 32 verbunden, der abhängig vom Steuersignal 42 einen Meßwert 49 für den Synchronwert des geklemmten Videosignals 40 auswählt. Aus dem Meßwert 48 für den Schwarzwert und dem Meßwert 49 für den Synchronwert des geklemmten Videosignals 40 wird ein arithmetischer Mittelwert 50 berechnet. Der Mittelwert 50 wird mittels einer zweiten digitalen Regeleinrichtung 21, die Tiefpaßcharakter besitzt, gefiltert. Dadurch werden kurzzeitige Schwankungen des Mittelwertes 50 gedämpft. Das Ausgangssignal der zweiten Regeleinrichtung 21 ist die Synchronabtrennschwelle 41. Weiterhin wird der Regeleinrichtung 21 der geregelte Meßwert 53 für den Schwarzwert zugeführt und derart verarbeitet, daß das Ausgangssignal der zweiten Regelanordnung 21 den zeitlichen Änderungen des Meßwertes 53 nachgeführt wird. Damit die Synchronabtrennschwelle 41 bereits zu Beginn des Meßverfahrens einen definierten Wert aufweist, der zwischen dem Schwarzwert und dem Synchronwert des geklemmten Videosignals 40 liegt, ist ein Schaltungsblock 35 vorgesehen, der bei Aktivierung durch das Steuersignal 46 der Synchronabtrennschwelle 41 einen Startwert zuweist. Außerdem ist ein weiterer Schaltungsblock 36 vorgesehen, durch den der Synchronabtrennschwelle 41 ein Rücksetzwert zugewiesen wird: Er wird dann durch das Steuersignal 47 aktiviert, wenn das geklemmte Videosignal 40 einen derart großen negativen Pegelsprung aufweist, daß die Synchronabtrennschwelle 41 aufgrund der verzögernden Tiefpaßwirkung der zweiten Regelanordnung 21 dem Videosignal nicht schnell genug folgt und nicht mehr zwischen dem Schwarzsignalanteil und dem Synchronsignalanteil des Videosignals liegt.

Die oben erwähnten Steuersignale 42 ... 47 und 55 werden mittels einer Steuereinrichtung 28 aus der Synchronabtrennschwelle 41, dem geklemmten Videosignal 40, dem Signal 22 und einem Startsignal 54 erzeugt.

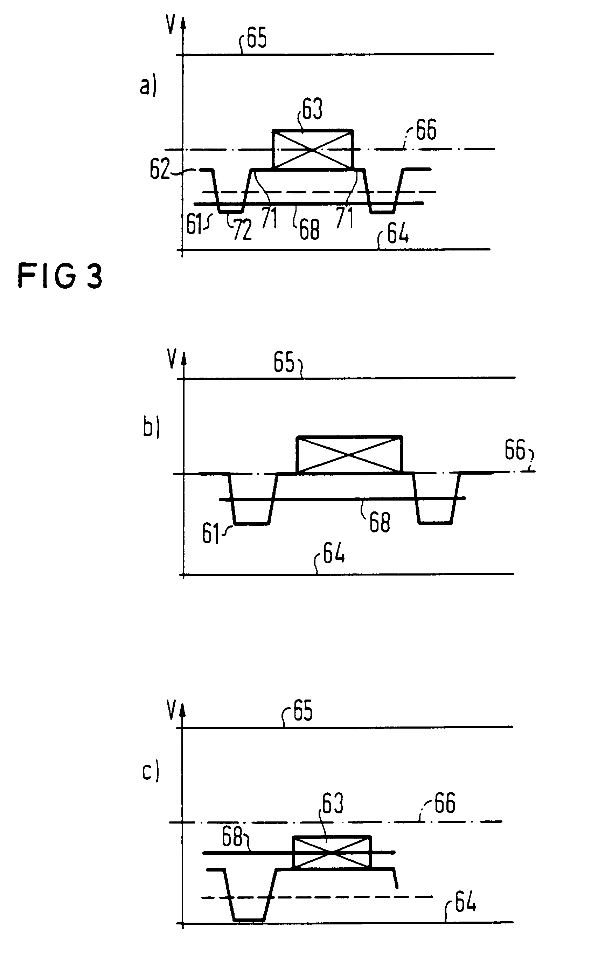

In FIG 3 ist ein Diagramm gezeigt, in dem mögliche Pegellagen von in der Anordnung der FIG 2 vorkommenden Signalen dargestellt sind. Das Funktionsprinzip der Anordnung der FIG 2 wird im folgenden anhand der FIG 3 erläutert. Ein beispielhafter Pegelverlauf während einer Zeile des geklemmten Videosignals 40 ist im Teil a) der FIG 3 dargestellt. Das Videosignal ist digital, d.h. es liegt als eine Folge von numerischen Abtastwerten vor, die zwischen einer unteren und einer oberen Pegelgrenze 64 bzw. 65 der Digital-Analog-Wandlereinrichtung 8 liegen. Das Videosignal enthält während einer Zeile einen Synchronboden 72, eine Schwarzschulter 71 und eine Bildinformation 63. Der unmittelbar nach dem Synchronboden 72 folgende Teil der Schwarzschulter 71 wird als hintere Schwarzschulter bezeichnet. Der Pegel der Schwarzschulter 71 wird als Schwarzwert 62, der Pegel des Synchronbodens 72 als Synchronwert 61 bezeichnet. Die Schaltungsanordnung in FIG 2 bewirkt, daß der Schwarzwert 62 auf einen Pegel 66, der in der Mitte zwischen der unteren und der oberen Pegelgrenze 64, 65 liegt, gebracht wird (Teil b) der FIG 3). Dies wird durch die Schaltung 20 erreicht. Die Synchronabtrennschwelle 68 wird mit Hilfe des Schaltungsblockes 35 anfangs auf einen Startwert gelegt. Dieser liegt geringfügig oberhalb des Synchronwertes 61. Während des Einschwingvorganges wird die Synchronabtrennschwelle 68 in die Mitte des Pegelhubes zwischen Schwarzwert und Synchronwert gebracht. Hierzu werden mittels der Meßanordnungen 23, 24 und 25, 26 der Schwarzwert und der Synchronsignalanteil des geklemmten Videosignals 40 bestimmt.

Da zu Beginn des Regelvorganges die zeitliche Lage des Synchronwertes und des Schwarzwertes nicht bekannt sind, werden die Meßwerte hierfür jeweils nur nach einem näherungsweisen Meßverfahren berechnet. Im eingeschwungenen Zustand der Anordnung läßt sich die zeitliche Lage des Synchron- und Schwarzsignalanteils relativ genau bestimmen, und es werden die Meßwerte jeweils nach einem exakten Meßverfahren berechnet. Als Kriterium dafür, ob die Meßwerte nach dem näherungsweisen oder dem exakten Meßverfahren verwendet werden, dient der Einrastzustand des Phasenregelkreises. Der Meßwert 48 für den Schwarzwert sowie der aus den Meßwerten für den Schwarz- und den Synchronwert gebildete Mittelwert 50 werden jeweils über einen Regler mit Tiefpaßcharakter 27 bzw. 21 geführt. Durch das Tiefpaßverhalten werden für eine Zeitdauer von wenigen Zeilen auftretende Störungen im Videosignal 17 in ihrer Wirkung auf die Synchronabtrennschwelle gedämpft. Wenn im eingeschwungenen Zustand ein starker negativer Pegelsprung des Videosignales erfolgt, kann der Fall eintreten (Teil c) der FIG 3), daß die Synchronabtrennschwelle 68 im Bildinhalt 63 des Videosignales 40 liegt. Die digitale Synchronisationseinrichtung 11 sowie die Synchronabtrennstufe 9 könnten dann auf den Bildinhalt 63 ansprechen. Dies würde zur Fehlfunktion des Gerätes führen. Für diesen Fall ist der Schaltungsblock 36 vorgesehen, der der Synchronabtrennschwelle einen Rücksetzwert zuweist, der sicher zwischen dem Schwarzwert und dem Synchronwert liegt.

Zur Bestimmung des Schwarzwertes des geklemmten Videosignals 40 nach dem näherungsweisen Meßverfahren erhält die Meßanordnung 23 durch das Steuersignal 43 einen Impuls, der sicher im Bereich der hinteren Schwarzschulter 71 des Videosignales liegt. Es wird fortlaufend der Mittelwert zweier Abtastwerte des Videosignals 40 gebildet. Zum durch das Steuersignal 43 bestimmten Zeitpunkt wird der Mittelwert als Meßwert übernommen. Die dritte Meßanordnung 25, die der näherungsweisen Bestimmung des Synchronwertes des Videosignals 40 dient, ist als Tiefpaß ausgebildet, der bezüglich der negativen Flanke des Synchronsignalanteils eine starke Tiefpaßwirkung aufweist. Die Zeitkonstante dieses Tiefpasses ist etwas kleiner als die Hälfte der Zeitdauer des Synchronbodens. Dies entspricht der Länge des Synchronsignalanteils der Vortrabanten während der vertikalen Austastlücke des Videosignals. Mittels einer diesem Tiefpaß nachgeschalteten Einrichtung zur Bestimmung des jeweils kleineren von zwei aufeinander folgenden Werten läßt sich der Minimalwert einer Zeile des Videosignals als ein näherungsweiser Wert für den Synchronwert feststellen. Durch einen Impuls des Steuersignals 55 wird jeweils ein Mal pro Zeile die Meßanordnung 25 rückgesetzt. Die zweite Meßanordnung 24, die der exakten Bestimmung des Schwarzsignalanteils dient, bildet den Mittelwert aus einer Vielzahl von Werten im Bereich der hinteren Schwarzschulter 71 des Videosignals 40. Die vierte Meßanordnung 26, die einen exakten Meßwert für den Synchronwert des Videosignals 40 bildet, bestimmt einen Mittelwert aus einer Vielzahl von Werten des Videosignals im Bereich des Synchronbodens 72. Hierzu ist je ein Akkumulator vorgesehen, der jeweils die Vielzahl von Werten addiert und eine anschließende Division durch die Anzahl der Additionen durchführt. Ist die Anzahl der Additionen eine Zweierpotenz, läßt sich die Mittelwertbildung durch eine Rechtsschiebung erreichen. Die Steuersignale 44, 45 dienen zum zeitrichtigen Auslesen der errechneten Mittelwerte.

Die Steuereinrichtung 28 erzeugt aus der Synchronabtrennschwelle 41, dem geklemmten Videosignal 40, einem Signal 22, das von der digitalen Synchronisationseinrichtung 11 erzeugt wird und deren Einrastzustand anzeigt, und einem Signal 54, das den Beginn des Regelvorganges anzeigt, die Steuersignale, die zum bezüglich des Videosignals zeitrichtigen Betrieb der Schaltung verwendet werden. Zur Erzeugung des Signals 43 steht ein erster Zähler zur Verfügung, der startet, wenn der Pegel des Videosignals 40 den Pegel der Synchronabtrennschwelle 41 unterschreitet. Durch Auscodierung eines geeigneten Zählerstandes erhält das Signal 43 einen Impuls, der sicher im Bereich der hinteren Schwarzschulter 71 liegt und zur Übernahme des näherungsweisen Meßwertes für den Schwarzwert verwendet wird. Auf die gleiche Weise wird das Steuersignal 55 zur Rücksetzung der Meßanordnung 25 ein Mal pro Zeile aktiviert. Die Steuersignale 44, 45 werden durch Codierung der Ausgänge eines weiteren Zählers erzeugt, der phasenstarr in bezug auf das Videosignal 40 im eingeschwungenen Zustand der digitalen Synchronisationseinrichtung 11 läuft. Ein solcher Zähler ist üblicherweise im digitalen Phasenregelkreis der Einrichtung 11 bereits vorhanden. Das Steuersignal 44 erhält einen Impuls im Bereich der hinteren Schwarzschulter, das Steuersignal 45 im Bereich des Synchronbodens einer Zeile. Das Steuersignal 42 zur Steuerung der Multiplexer 31, 32 entspricht dem Signal 22, welches den Einrastzustand des digitalen Phasenregelkreises in der Einrichtung 11 angibt. Das Steuersignal 46 entspricht dem Startsignal 54. Das Steuersignal 47 wird aktiviert, wenn im eingeschwungenen Zustand der Pegel der Synchronsignalabtrennschwelle 41 höher ist als der Meßwert 48 für den Schwarzwert des Videosignals.

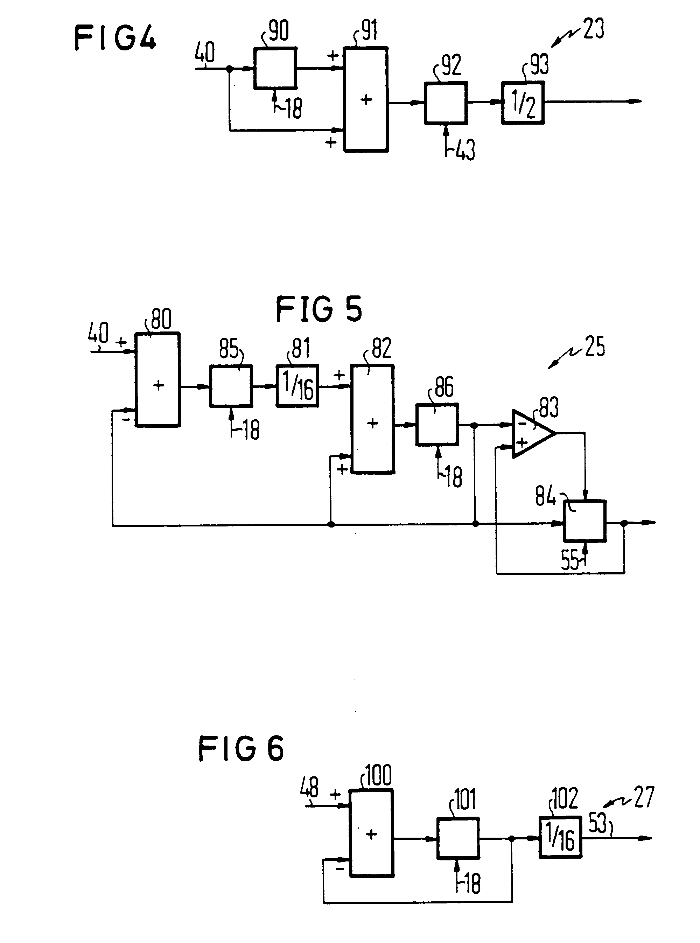

Im folgenden wird die Realisierung der Meßanordnungen 23, 25 und der Regeleinrichtungen 27, 21 angegeben. In der FIG 4 ist eine Realisierung der ersten Meßanordnung 23 gezeigt. Das Videosignal 40 wird sowohl direkt wie auch durch ein erstes Register 90 verzögert auf einen Addierer 91 geführt, dessen Ausgangssignal in einem weiteren Register 92 gespeichert wird. Dem Register 92 ist ein Teiler 93 durch 2 nachgeschaltet, dessen Ausgangssignal den näherungsweisen Meßwert für den Schwarzwert des Videosignals 40 darstellt. Der Takteingang des Registers 92 wird vom Steuersignal 43 gesteuert. Das Register 90 erhält den Systemtakt 18.

In FIG 5 ist die Realisierung der dritten Meßanordnung 25 gezeigt. Das Videosignal 40 wird einem ersten Addierer 80 zugeführt, dessen Ausgang über ein erstes Register 85 und einen Teiler 81 durch 16 mit einem weiteren Addierer 82 verbunden ist. Der Ausgang des Addierers 82 ist mit einem zweiten Register 86 verbunden, dessen Ausgangssignal auf den Addierer 80 negiert und auf den Addierer 82 positiv rückgeführt wird. Das Ausgangssignal des Registers 86 wird weiterhin einem Eingang eines Comparators 83 zugeführt, dessen Ausgangssignal den Takteingang eines dritten Registers 84 steuert. Der Ausgang des dritten Registers 84 bildet den näherungsweisen Meßwert für den Synchronwert des Videosignals 40 und ist auf den anderen Eingang des Comparators 83 rückgekoppelt. Wenn der im Register 84 gespeicherte Wert größer ist als der im Register 86 gespeicherte Wert, ergibt sich ein Impuls am Ausgang des Comparators 83, der den Wert des Registers 86 im Register 84 speichert. Das Signal 55 dient zum Rücksetzen des Registers 84 ein Mal pro Zeile. Die Register 85, 86 werden von dem vom digitalen Phasenregelkreis gelieferten Taktsignal 18 getaktet.

In FIG 6 ist eine Realisierung für die erste Regeleinrichtung 27 gezeigt. Der Meßwert 48 für den Schwarzwert wird dem ersten Eingang eines Addierers 100 zugeführt, dessen Ausgang mit einem Register 101 verbunden ist. Der Ausgang des Registers 101 ist auf den zweiten Eingang des Addierers 100 rückgekoppelt und wird weiterhin einem Teiler 102, der durch 16 dividiert, zugeführt. Das Ausgangssignal des Teilers 102 ist der geregelte Meßwert 53 für den Schwarzwert des Videosignals 40. Das Register 101 wird von einem zeilenfrequenten Taktsignal 18 gesteuert, das in der digitalen Synchronisationseinrichtung 11 erzeugt wird.

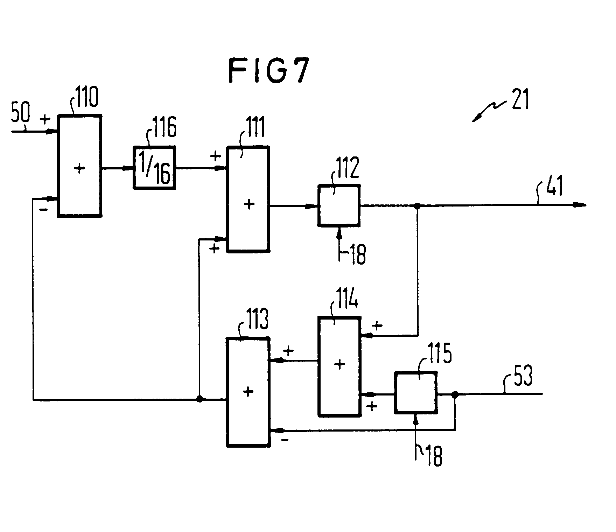

In FIG 7 ist eine Realisierung für die zweite Regeleinrichtung 21 gezeigt. Der Mittelwert 50 wird dem ersten Eingang eines ersten Addierers 110 zugeführt, dessen Ausgang über einen Teiler 116 durch 16 mit dem ersten Eingang eines weiteren Addierers 111 verbunden ist. Der Ausgang des Addierers 111 ist mit einem Register 112 verbunden, dessen Ausgangssignal die Synchronabtrennschwelle 41 ist. Der zweiten Regeleinrichtung 21 wird weiterhin der geregelte Meßwert 53 für den Schwarzwert zugeführt, der durch ein weiteres Register 115 verzögert in einem zweiten Addierer 114 zur Synchronabtrennschwelle 41 addiert wird. Das Signal 53 wird weiterhin in einem dritten Addierer 113 vom Ausgangssignal des Addierers 114 subtrahiert. Das Ausgangssignal des Addierers 113 wird dem zweiten Eingang des Addierers 110 negiert und dem zweiten Eingang des Addierers 111 des positiv zugeführt. Mittels der Anordnung der Addierer 110, 113, 114 und des Registers 115 wird die Synchronabtrennschwelle 41 dem Signal 53 nachgeführt. Die Register 112, 115 werden von einem zeilenfrequenten Taktsignal 18, das in der digitalen Synchronisationseinrichtung 11 erzeugt wird, getaktet.

## Patentansprüche

1. Gerät zum Verarbeiten von in Zeilen aufgeteilten Videosignalen mit einer digitalen Synchronabtrennstufe, die aus digitalen Videosignalen in bezug auf eine digitale Synchronabtrennschwelle ein zeilensynchrones Taktsignal erzeugt, mit den Merkmalen:
(a) es ist eine Schaltung (20) vorgesehen, der das Videosignal (17) zugeführt wird und durch die ein geklemmtes Videosignal (40) erzeugt wird, dessen Schwarzwert auf einen konstanten Wert im Aussteuerbereich des Videosignals dadurch eingestellt wird, daß die Schaltung (20)
(b) eine erste Meßanordnung (23) enthält, die durch ein näherungsweises Meßverfahren einen ersten Meßwert für den Schwarzwert des geklemmten Videosignales bestimmt,
(c) eine zweite Meßanordnung (24) enthält, die durch ein exaktes Meßverfahren einen zweiten Meßwert für den Schwarzwert des geklemmten Videosignals bestimmt,
(d) eine erste Multiplexereinrichtung (31) enthält, durch die durch ein erstes Steuersignal (42) als Meßwert für den Schwarzwert (48) des geklemmten Videosignals entweder der erste oder der zweite Meßwert für den Schwarzwert des geklemmten Videosignals ausgewählt wird, und
(e) eine erste Regeleinrichtung (27) mit Tiefpaßcharakter zur Dämpfung von kurzzeitigen Pegelschwankungen enthält, durch die aus dem Meßwert für den Schwarzwert (48) ein erster geregelter Meßwert (53) gebildet wird, der als Stellgröße zur Klemmung des Videosignals verwendet wird,
(f) es ist eine dritte Meßanordnung (25) vorgesehen, die aus dem geklemmten Videosignal (40) durch ein näherungsweises Meßverfahren einen ersten Meßwert für den Synchronwert des geklemmten Videosignals bestimmt,
(g) es ist eine vierte Meßanordnung (26) vorgesehen, die aus dem geklemmten Videosignal (40) durch ein exaktes Meßverfahren einen zweiten Meßwert für den Synchronwert des geklemmten Videosignals bestimmt,
(h) es ist eine zweite Multiplexereinrichtung (32) vorgesehen, durch die durch das erste Steuersignal (42) als Meßwert für den Synchronwert (49) des geklemmten Videosignales entweder der erste oder der zweite Meßwert für den Synchronwert des geklemmten Videosignals ausgewählt wird,
(i) es sind Mittel vorgesehen, mit denen ein Mittelwert aus dem Meßwert für den Schwarzwert (48) und den Meßwert für den Synchronwert (49) gebildet wird,
(j) es ist eine zweite Regeleinrichtung (21) mit Tiefpaßcharakter zur Dämpfung von kurzzeitigen Schwankungen des Mittelwertes vorgesehen, deren Eingangssignal der Mittelwert und deren Ausgangssignal die Synchronabtrennschwelle (41) ist, und
(k) es ist eine Steuereinrichtung (28) vorgesehen, die das erste Steuersignal (42) erzeugt, so daß in der Startphase des Einschwingvorgangs der Synchronabtrennstufe die ersten und bei weitgehend eingeschwungenem Zustand der Synchronabtrennstufe die zweiten Meßwerte für den Schwarzwert und den Synchronwert des geklemmten Videosignals verwendet werden.

2. Gerät nach Anspruch 1, **dadurch gekennzeichnet,** daß
(a) der Synchronabtrennschwelle (41) ein Startwert zugewiesen wird, wenn der Einschwingvorgang der Synchronabtrennstufe beginnt, und
(b) der Synchronabtrennschwelle (41) ein Rücksetzwert zugewiesen wird, wenn im eingeschwungenen Zustand der Synchronabtrennstufe ein relativ großer Pegelsprung des Videosignals (17) erfolgt.

3. Gerät nach Anspruch 1, **dadurch gekennzeichnet,** daß die Synchronabtrennschwelle dem Schwarzwert des geklemmten Videosignals (40) nachgeführt wird.

4. Gerät nach Anspruch 1, **dadurch gekennzeichnet,** daß in jeweils einer Zeile des geklemmten Videosignals (40)
(a) mittels der ersten Meßanordnung (23) ein Mittelwert aus wenigen Meßwerten im Bereich der hinteren Schwarzschulter des geklemmten Videosignals (40) bestimmt wird,
(b) mittels der zweiten Meßanordnung (24) ein Mittelwert aus einer Vielzahl von Meßwerten im Bereich der hinteren Schwarzschulter des geklemmten Videosignals (40) bestimmt wird,
(c) mittels der dritten Meßanordnung (25) das geklemmte Videosignal (40) über ein Filter mit in bezug auf den Synchronsignalanteil des Videosignals starker Tiefpaßwirkung geführt wird und dann das Minimum bestimmt wird, und
(d) mittels der vierten Meßanordnung (26) der Mittelwert aus einer Vielzahl von Meßwerten im Bereich des Synchronsignalanteils des geklemmten Videosignals (40) bestimmt wird.

5. Gerät nach den Ansprüchen 1, 2 und 4, **dadurch gekennzeichnet,** daß in der Steuereinrichtung (28) Mittel vorgesehen sind, mit denen aus der Synchronabtrennschwelle (41), dem geklemmten Videosignal (40) und einem Signal, das den eingeschwungenen Zustand eines der Synchronabtrennstufe nachgeschalteten Phasenregelkreises (11) anzeigt,
(a) ein zweites, drittes, viertes und fünftes Steuersignal (43, 44, 45, 55) erzeugt werden, die jeweils der ersten, zweiten, dritten und vierten Meßanordnung (23, 24, 26) zugeführt werden und die zum geklemmten Videosignal (40) zeitrichtige Steuerung der Meßvorgänge bewirken,
(b) ein sechstes Steuersignal (47) erzeugt wird, das der Synchronabtrennschwelle (41) den Rücksetzwert zuordnet, wenn im eingeschwungenen Zustand der Synchronabtrennstufe ein Pegelsprung des Videosignals (17) erfolgt.

6. Gerät nach Anspruch 1, **dadurch gekennzeichnet,** daß das Videosignal (17) in einem Eingangstiefpaß (29) zur Rausch- und Farbträgerunterdrückung gefiltert wird.

7. Gerät nach Anspruch 1, **dadurch gekennzeichnet,** daß das geklemmte Videosignal (40) durch einen Begrenzer (30) zur Vermeidung von Ubersteuerungen in seinem Wertebereich begrenzt wird.

## Claims

1. Apparatus for processing video signals, which are split into lines, using a digital synchronous separator which produces a line-synchronous clock signal from digital video signals with respect to a digital synchronous separation threshold, having the features:
(a) a circuit (20) is provided to which the video signal (17) is supplied and by means of which a clamped video signal (40) is produced whose black level is set to a constant level in the drive range of the video signal in that the circuit (20)
(b) contains a first measuring arrangement (23) which uses an approximate measuring method to determine a first measurement for the black level of the clamped video signal,
(c) contains a second measuring arrangement (24) which uses an exact measuring method to determine a second measurement for the black level of the clamped video signal,
(d) contains a first multiplexer device (31) by means of which either the first or second measurement for the black level of the clamped video signal is selected by a first control signal (42) as the measurement for the black level (48) of the clamped video signal, and
(e) contains a first regulating device (27) with a low-pass filter characteristic in order to attenuate short-term level fluctuations, by means of which a first regulated measurement (53), which is used as the control variable for clamping the video signal, is formed from the measurement for the black level (48),
(f) a third measuring arrangement (25) is provided which uses an approximate measuring method to determine from the clamped video signal (40) a first measurement for the synchronization level of the clamped video signal,
(g) a fourth measuring arrangement (26) is provided which uses an exact measuring method to determine from the clamped video signal (40) a second measurement for the synchronization level of the clamped video signal,
(h) a second multiplexer device (32) is provided by means of which either the first or the second measurement for the synchronization level of the clamped video signal is selected by the first control signal (42) as the measurement for the synchronization level (49) of the clamped video signal,
(i) means are provided using which a mean value is formed from the measurement for the black level (48) and the measurement for the synchronization level (49),
(j) a second regulating device (21) having a low-pass filter characteristic is provided in order to attenuate short-term fluctuations of the mean value, which second regulating device (21) has as its input signal the mean value and as its output signal the synchronous separation threshold (41), and
(k) a control device (28) is provided which produces the first control signal (42) such that the first measurements for the black level and the synchronization level of the clamped video signal are used in the initial phase of the transient process of the synchronous separator, and the second measurements for the black level and the synchronization level of the clamped video signal are used when the synchronous separator is largely in the steady state.

2. Apparatus according to Claim 1, characterized in that
(a) the synchronous separation threshold (41) is assigned an initial value when the transient process of the synchronous separator starts, and
(b) the synchronous separation threshold (41) is assigned a reset value when a relatively large jump in the level of the video signal (17) occurs when the synchronous separator is in the steady state.

3. Apparatus according to Claim 1, characterized in that the synchronous separation threshold is slaved to the black level of the clamped video signal (40).

4. Apparatus according to Claim 1, characterized in that, in one line of the clamped video signal (40) in each case,
(a) a mean value is determined by means of the first measuring arrangement (23) from a few measurements in the region of the rear black shoulder of the clamped video signal (40),
(b) a mean value is determined by means of the second measuring arrangement (24) from a large number of measurements in the region of the rear black shoulder of the clamped video signal (40),
(c) the clamped video signal (40) is passed by means of the third measuring arrangement (25) via a filter which has a low-pass filter effect which is strong in comparison with the synchronization signal element of the video signal, and the minimum is then determined, and
(d) the mean value is determined by means of the fourth measuring arrangement (26) from a large number of measurements in the region of the synchronization signal element of the clamped video signal (40).

5. Apparatus according to Claims 1, 2 and 4, characterized in that means are provided in the control device (28) using which means, from the synchronous separation threshold (41), the clamped video signal (40) and a signal which indicates the steady state of a phase locked loop (11) connected downstream of the synchronous separator,
(a) a second, a third, a fourth and a fifth control signal (43, 44, 45, 55) are produced which are respectively supplied to the first, the second, the third and the fourth measuring arrangement (23, 24, 26), and result in the measuring processes being controlled at the correct time with respect to the clamped video signal (40),
(b) a sixth control signal (47) is produced which assigns the reset value to the synchronous separation threshold (41) when a jump in the level of the video signal (17) occurs in the steady state of the synchronous separator.

6. Apparatus according to Claim 1, characterized in that the video signal (17) is filtered in an input lowpass filter (29) in order to suppress noise and the colour sub-carrier.

7. Apparatus according to Claim 1, characterized in that the clamped video signal (40) is limited by a limiter (30) in order to prevent its level range being overdriven.

## Revendications

1. Appareil de traitement de signaux vidéo répartis en lignes, comportant un étage numérique de séparation de signal de synchronisation, qui produit à partir de signaux numériques vidéo, en référence à un seuil numérique de séparation de signal de synchronisation, un signal de cadence qui est en synchronisme avec les lignes, ayant les particularités :
(a) il est prévu un circuit (20), auquel est envoyé le signal vidéo (17) et par lequel un signal vidéo verrouillé (40) est produit, le niveau du noir de ce signal vidéo verrouillé étant réglé à une valeur constante dans le domaine de réglage du signal vidéo, par le fait que le circuit (20)
(b) comprend un premier dispositif (23) de mesure qui détermine, par un procédé de mesure approximatif, une première valeur de mesure du niveau du noir du signal vidéo verrouillé,
(c) comprend un second dispositif (24) de mesure, qui détermine par un procédé de mesure exact une seconde valeur de mesure du niveau du noir du signal vidéo verrouillé,
(d) comprend un premier dispositif (31) de multiplexage, par lequel il est sélectionné par un premier signal (42) de commande comme valeur de mesure du niveau (48) du noir du signal vidéo verrouillé, soit la première, soit la seconde valeur de mesure du niveau du noir du signal vidéo verrouillé, et
(e) comprend un premier dispositif (27) de réglage du type passe-bas, qui est destiné à atténuer des fluctuations temporaires de niveau et par lequel une première valeur de mesure réglée (53) utilisée comme grandeur réglante pour verrouiller le signal vidéo, est formée à partir de la valeur de mesure du niveau (48) du noir,
(f) il est prévu un troisième dispositif (25) de mesure, qui détermine à partir du signal vidéo verrouillé (40), par un procédé de mesure approximatif, une première valeur de mesure du niveau de synchronisation du signal vidéo verrouillé,
(g) il est prévu un quatrième dispositif (26) de mesure, qui détermine à partir du signal vidéo verrouillé (40), par un procédé de mesure exact, une seconde valeur de mesure du niveau de synchronisation du signal vidéo verrouillé,
(h) il est prévu un deuxième dispositif (32) de multiplexage, par lequel il est sélectionné par le premier signal (42) de commande comme valeur de mesure du niveau (49) de synchronisation du signal vidéo verrouillé, soit la première, soit la deuxième valeur de mesure du niveau de synchronisation du signal vidéo verrouillé,
(i) il est prévu des moyens, par lesquels est formée une valeur moyenne à partir de la valeur de mesure du niveau (48) du noir et de la valeur de mesure du niveau (49) de synchronisation,
(j) il est prévu un deuxième dispositif (21) de régulation de type passe-bas, qui est destiné à atténuer des fluctuations temporaires de la valeur moyenne, dont le signal d'entrée est la valeur moyenne et dont le signal de sortie est le seuil (41) de séparation de signal de synchronisation, et
(k) il est prévu un dispositif (28) de commande, qui produit le premier signal (42) de commande de sorte que dans la phase de démarrage du régime transitoire de l'étage de séparation de signal de synchronisation, il soit utilisé les premières valeurs de mesure du niveau du noir et du niveau de synchronisation du signal vidéo verrouillé et qu'il soit utilisé, lorsque l'étage de séparation du signal de synchronisation est dans un état établi dans une large mesure, les deuxièmes valeurs de mesure du niveau du noir et du niveau de synchronisation du signal vidéo verrouillé.

2. Appareil suivant la revendication 1, caractérisé en ce que
(a) il est associé au seuil (41) de séparation de signal de synchronisation une valeur de départ, lorsque le régime transitoire de l'étage de séparation de signal de synchronisation commence, et
(b) il est associé au seuil (41) de séparation de signal de synchronisation, une valeur de réinitialisation, lorsqu'il s'effectue un saut de niveau relativement grand du signal vidéo 17 à l'état établi de l'étage de séparation de signal de synchronisation.

3. Appareil suivant la revendication 1, caractérisé en ce que le seuil de séparation de signal de synchronisation suit le niveau du noir du signal (40) vidéo verrouillé.

4. Appareil suivant la revendication 1, caractérisé en ce que dans chacune des lignes du signal vidéo verrouillé (40)
(a) il est déterminé, au moyen du premier dispositif (23) de mesure, une valeur moyenne de quelques valeurs de mesure dans le domaine du palier arrière du noir du signal vidéo verrouillé (40),
(b) il est déterminé, au moyen du deuxième dispositif (24) de mesure, une valeur moyenne d'une pluralité de valeurs de mesure dans le domaine du palier arrière du noir du signal vidéo verrouillé (40),
(c) le signal vidéo verrouillé (40) est envoyé, au moyen du troisième dispositif (25) de mesure, par l'intermédiaire d'un filtre à effet passe-bas prononcé en ce qui concerne la composante de signal de synchronisation du signal vidéo et le minimum est déterminé, et
(d) il est déterminé, au moyen du quatrième dispositif (26) de mesure, la valeur moyenne d'une pluralité de valeurs de mesure dans le domaine de la composante du signal de synchronisation du signal vidéo verrouillé (40).

5. Appareil suivant les revendications 1, 2 et 4, caractérisé en ce qu'il est prévu, dans le dispositif (28) de commande, des moyens par lesquels sont produits à partir du seuil (41) de séparation de signal de synchronisation, à partir du signal vidéo verrouillé (40) et d'un signal qui indique l'état établi d'une boucle (11) à verrouillage de phase branchée en aval de l'étage de séparation du signal de synchronisation,
(a) des deuxième, troisième, quatrième et cinquième signaux (43,44,45,55) de commande, qui sont envoyés aux premier, deuxième, troisième et quatrième dispositifs (23,24,26) de mesure et qui provoquent une commande des opérations de mesure au bon moment par rapport au signal (40) vidéo verrouillé,
(b) un sixième signal (47) de commande, qui associe au seuil (41) de séparation de signal de synchronisation la valeur de réinitialisation, lorsqu'il s'effectue, dans l'état établi de l'étage de séparation du signal de synchronisation, un saut de niveau du signal vidéo (17).

6. Appareil suivant la revendication 1, caractérisé en ce que le signal vidéo (17) est filtré dans un passe-bas (29) d'entrée pour la suppression de la sous-porteuse de chrominance et du bruit.

7. Appareil suivant la revendication 1, caractérisé en ce que le signal vidéo verrouillé (40) est limité par un limiteur (30) destiné à empêcher des surmodulations dans son domaine de valeurs.
